# FASCICULE DE BREVET EUROPEEN

(11) **EP 2 040 916 B1**
(45) Date de publication et mention de la délivrance du brevet: **30.09.2020**
(21) Numéro de dépôt: 07763908.6
(22) Date de dépôt: 17.07.2007
(51) Int. Cl.: B32B 15/04, B32B 37/00, C23C 14/24, H01M 4/04, H01M 4/40

(54) **MATÉRIAU MULTICOUCHE À BASE DE LITHIUM VIF, PROCÉDÉ DE PRÉPARATION ET APPLICATIONS DANS LES GÉNÉRATEURS ÉLECTROCHIMIQUES**
AUF AKTIVEM LITHIUM BASIERENDES MEHRLAGIGES MATERIAL, HERSTELLUNGSVERFAHREN UND ANWENDUNGEN IN ELEKTROCHEMISCHEN GENERATOREN
MULTILAYER MATERIAL BASED ON ACTIVE LITHIUM, PREPARATION METHOD AND APPLICATIONS IN ELECTROCHEMICAL GENERATORS

(30) Priorité: 18.07.2006 CA 2552282
(43) Date de publication de la demande: 01.04.2009
(73) Titulaire: Hydro-Québec, Montréal QC H2Z 1A4 (CA)
(72) Inventeur: ZAGHIB, Karim, Longueuil, Québec J4M 2M7 (CA); DONTIGNY, Martin, Notre-Dame-du-Mont-Carmel QC G0X 3J0 (CA); PETITCLERC, Michel, Sainte-Julie QC J3E 3M7 (CA); GAUTHIER, Michel, La Prairie, Québec J5R 1E6 (CA)
(74) Mandataire: Lavoix
(86) Numéro de dépôt international: PCT/CA2007/001254
(87) Numéro de publication internationale: WO 2008/009107

(56) Documents cités:
- EP-A1- 0 692 831
- WO-A2-2004/051769
- US-A- 5 487 959
- US-A- 5 487 959
- US-A- 6 025 094
- US-A- 6 025 094
- US-A1- 2003 215 710
- US-A1- 2004 126 653
- US-A1- 2005 175 894
- US-B1- 6 402 795
- US-B1- 6 413 285
- US-B1- 6 413 285
- US-B1- 6 432 584
- US-B1- 6 432 584
- US-B2- 6 737 197
- US-B2- 6 737 197
- US-B2- 6 936 381

## Description

### DOMAINE DE L'INVENTION

La présente invention concerne un procédé d'élaboration d'un matériau multicouche à base de lithium vif, un procédé pour sa préparation, et son utilisation dans les batteries électrochimiques.

### ÉTAT DE LA TECHNIQUE

Les batteries au lithium métallique dans lesquelles l'électrolyte est un électrolyte polymère ont l'avantage de fournir une densité d'énergie en poids et en volume supérieure à celle des batteries Li-ion, grâce à la capacité de l'anode de lithium métallique qui est de 3.700 mAh/g. Cette valeur est 10 fois supérieure à celle d'une anode à base de graphite (LiC₆) ou 20 fois supérieure à celle d'anode de type spinelle de titane (Li₄Ti₅O₁₂).

En revanche, lors de la charge des batteries au lithium à courant élevé, dans lesquelles le lithium est électrodéposé, une éventuelle formation de dendrites sur la surface de lithium peut se produire assez rapidement après quelques cycles d'utilisation. Ces dendrites peuvent percer le séparateur (dans lequel l'électrolyte est imprégné) pour toucher la cathode.

Une solution à ce problème d'instabilité est proposée dans US-A-6,214,061. Elle consiste à protéger un film de lithium formant l'anode d'une batterie par une couche protectrice constituée par un matériau vitreux conducteur ionique, par exemple du verre ou un oxynitrure de phosphore et de lithium, désigné par LIPON. La couche protectrice est déposée sur un substrat, puis la couche de lithium est déposée sur la couche protectrice, et finalement un collecteur de courant est déposé sur la couche de lithium. La couche protectrice et la couche de lithium sont déposées par pulvérisation cathodique ou par vaporisation. Cette technique donne de bons résultats. Cependant, elle nécessite d'opérer sous vide pour le dépôt de la couche protectrice et de la couche de lithium, ce qui nécessite des dispositifs plus compliqués et plus coûteux sur le plan industriel.

L'utilisation d'un film mince de lithium est importante dans les batteries au lithium métal polymère, car elle permet d'optimiser l'excès de lithium, par comparaison à la capacité de la cathode.

La technologie d'obtention des films minces de lithium métallique par laminage est décrite dans CA-A-1.099.524 et CA-A-2.099.526 au nom d'Hydro-Québec.

CA-A-2.099.524 décrit un procédé de laminage d'un feuillard de lithium permettant d'obtenir un film de lithium d'une épaisseur comprise entre 10 et 100 µm. Ce procédé est caractérisé par le fait qu'à la sortie du laminoir et à la suite d'un seul passage, en présence d'un lubrifiant, le film laminé reste accolé sur la surface d'un des rouleaux de travail jusqu'en un point donné sur une partie de la circonférence de ce rouleau au-delà du point de rencontre entre les deux rouleaux. Bien que le film ainsi obtenu puisse être utilisé dans un générateur électrochimique, il présente une couche de passivation d'une épaisseur non négligeable.

CA-A-2.099.526 décrit des additifs pour lubrifiants utilisables dans le laminage de feuillards de lithium en films minces et qui en améliorent les performances. Ces additifs sont représentés par la formule générale L-A-B dans laquelle L désigne un radical hydrocarboné servant de segment lubrifiant, B désigne un segment oligomère servant de segment solvatant des sels métalliques et A désigne un lien chimique unissant le radical hydrocarboné et le segment oligomère.

### RESUME DE L'INVENTION

La présente invention a pour but de proposer un procédé pour l'élaboration de batteries électrochimiques qui ont une anode dont la matière active est un film mince de lithium, qui peut être mis en œuvre à la pression atmosphérique, c'est-à-dire dans des conditions industriellement plus commodes, et qui donne des batteries dans lesquelles ledit film de lithium est parfaitement adhérent aux éléments de la batterie qui lui sont adjacents et ne forme pas de dendrites lors du fonctionnement.

C'est pourquoi la présente invention est telle que mentionnée dans l'objet des revendications 1-13.

Le procédé de l'invention est destiné à la préparation d'un matériau multicouche comprenant au moins une couche de lithium vif, et il est caractérisé en ce qu'il comprend une étape consistant à déposer un film de lithium vif sur une couche de protection.

Le matériau multicouche selon l'invention comprend au moins une couche de lithium vif qui porte une couche de protection sur au moins l'une de ses surfaces, ladite couche de protection étant constituée par un matériau qui a une conductivité ionique,

Un matériau multicouche de l'invention, lorsqu'il est incorporé dans une batterie électrochimique comme anode, présente une excellente stabilité de l'impédance et une absence de formation de dendrites lors du cyclage.

Les batteries dont l'anode est constituée par un matériau multicouche de l'invention sont particulièrement performantes en ce qui concerne leur efficacité coulombique.

### BRÈVE DESCRIPTION DES DESSINS

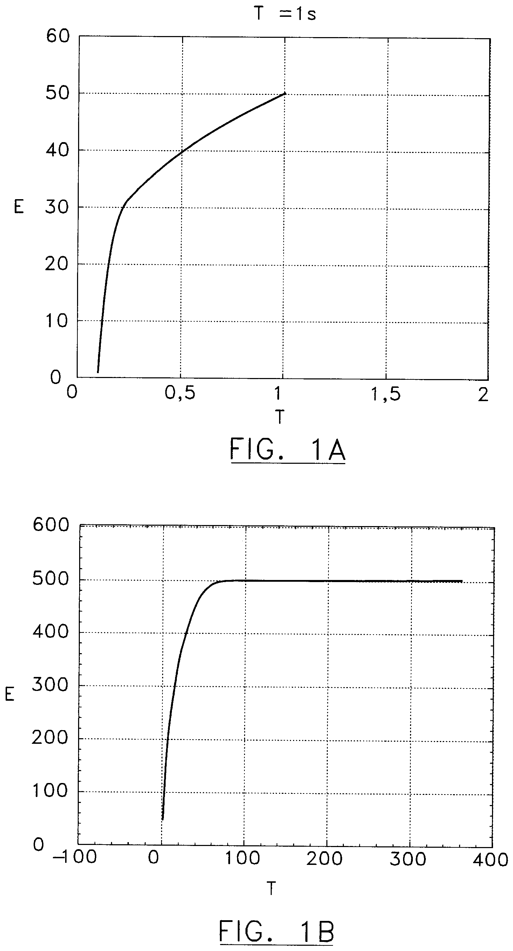

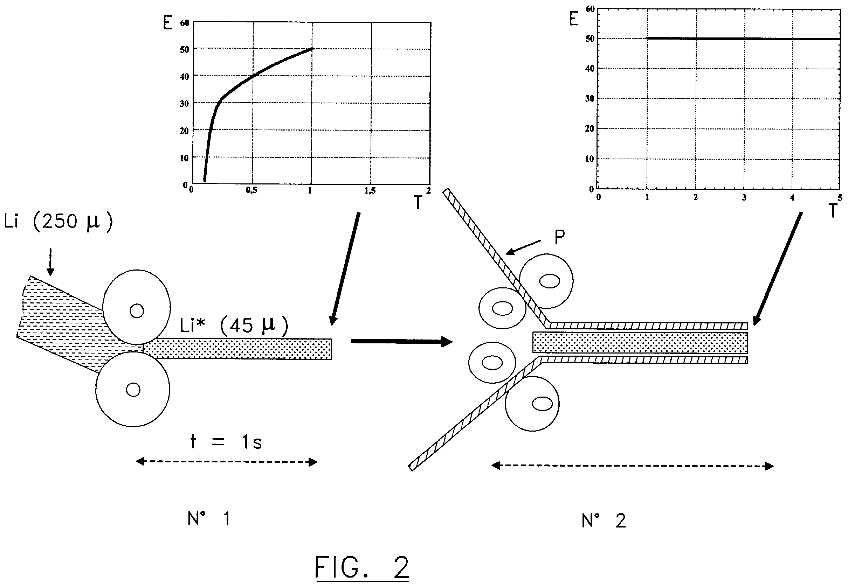

- La Figure 1 :: représente l'évolution de l'épaisseur d'un film de passivation du lithium (E, en Å) en ordonnée, en fonction du temps d'exposition dans une atmosphère d'air sec (T, en secondes) en abscisse, pour un film de lithium obtenu selon l'invention. La figure 1a est une vue agrandie de la zone T = 0 à 1 de la figure 2a.
- La Figure 2 :: représente le procédé de couchage du film de protection sur le lithium, qui permet de maintenir l'épaisseur de la couche de passivation du lithium constante dans le temps. Les courbes E (en Å) en fonction de T (en secondes) montrent l'évolution de l'épaisseur de la couche de passivation, avant (courbe de gauche) et après le dépôt de deux couches de protection (courbe de droite). Li désigne une feuille de lithium standard, Li* désigne un film de lithium vif. P désigne le matériau de protection (verre ou céramique). N°1 et N°2 désignent respectivement la 1^{ère} et la 2^{ème} étape du processus.

### DESCRIPTION GÉNÉRALE DE L'INVENTION

**Un premier objet** de l'invention est constitué par un procédé d'élaboration d'un matériau multicouche qui comprend au moins une couche de lithium vif, ledit procédé comprenant une étape consistant à déposer un film de lithium vif sur une couche de protection, ledit dépôt étant effectué par laminage pendant une durée de 1 à 15 secondes.

La couche de Lithium vif (ou à vif) est constituée par du lithium qui a un degré de pureté supérieur à 99 %, ou par un alliage de lithium comprenant moins de 3000 ppm d'impuretés. Une telle couche a de bonnes propriétés d'adhésion.

Dans un mode de réalisation, la couche de lithium vif porte sur une ou chacune de ses surfaces, une couche de passivation qui est de préférence telle que le rapport "épaisseur de la couche de passivation"/"épaisseur de la couche de lithium vif" est de 2.10⁻⁵ à 1.10⁻³.

Dans un autre mode de réalisation, l'épaisseur de la couche de passivation est nulle.

La couche de passivation comprend généralement au moins un composé de lithium du groupe constitué par Li₂O, Li₂CO₃, LiOH, et Li₂S₂O₄. Li₂O, où Li₂CO₃ et LiOH se forment en atmosphère sèche. Li₂S₂O₄ se forme en présence de SO₂.

Le dépôt du film de lithium vif sur la couche protectrice est effectué par laminage. Les conditions de mise en œuvre d'un dépôt de lithium sur une couche support par laminage, notamment les additifs utilisés, en particulier des lubrifiants, sont décrites dans CA-A-2.099.524 et CA-A-2.099.526.

Lorsque le matériau multicouche est destiné à être utilisé comme anode biface dans une batterie, on dépose une couche de protection sur chacune des surfaces du film de lithium, les deux couches de protection étant constituées par un matériau qui a une conduction ionique.

Lorsque le matériau multicouche est destiné à être utilisé comme anode monoface dans une batterie, on dépose le film de lithium vif sur une couche de protection constituée par un matériau qui a une conduction ionique. Il est

avantageux de déposer sur l'autre surface du film de lithium vif, une couche de protection constituée par un matériau à conduction électronique qui peut faire office de collecteur de courant pour l'anode.

Le dépôt de la couche de lithium par laminage permet d'opérer à la pression atmosphérique. Le matériau multicouche est élaboré de préférence dans une atmosphère d'air sec, par exemple dans une chambre anhydre caractérisée par un point de rosée entre -45 et -55°C et une humidité relative entre 0,7 et 2,2 %, et de préférence par un point de rosée de -50 °C à 1,3 % d'humidité relative.

Le dépôt d'une couche de protection est effectué en 1 à 15 secondes.

Lorsque le matériau multicouche comprend deux couches de protection de part et d'autre de la couche de lithium vif, la deuxième couche de protection peut être déposée sur une surface libre du film de lithium vif en même temps que la première couche de protection est déposée sur l'autre surface libre du film de lithium. Le dépôt de la deuxième couche peut aussi être effectué après le dépôt de la première couche, de préférence moins de 15 secondes après.

Le matériau utilisé pour former une couche de protection qui a une conduction ionique est de préférence un matériau qui a une conduction ionique supérieure à 10⁻⁴ S.cm², et qui est choisi par exemple parmi les céramiques, les verres, les matériaux polymères, et leurs mélanges.

Une couche de protection conductrice ionique peut comprendre au moins deux sous-couches, constituées indépendamment l'une de l'autre par un matériau qui a une conduction ionique supérieure à 10⁻⁴ S.cm², et qui est choisi parmi les céramiques, les verres, et les matériaux polymères contenant éventuellement une charge céramique.

Une couche protectrice en céramique est avantageusement constituée par une céramique de type oxynitrure de phosphore et de lithium non stoechiométrique. Ce type de céramique est généralement désigné par la dénomination LIPON. On utilise de préférence dans le cadre de la présente invention le composé Li_{3,3}PO_{3,9}N_{0,17} et les composés voisins. Une présentation détaillée des composés LIPON et de leur utilisation, notamment dans la préparation de films minces pour batteries tout solide, est faite dans "Micro Power Sources", K. Zaghib et S. Surampudi, Proceedings Volume 2000-03, pp. 70 à 79, édité par The Electrochmical Society.

Une couche de céramique LIPON peut être déposée sur un substrat par pulvérisation cathodique, ablation laser ou plasma, par exemple à partir d'une cible de Li₃PO₄. Le substrat pour le dépôt du film de protection peut être un film de polypropylène ou d'un copolymère PP-PE-PP servant de séparateur dans le générateur. Le substrat peut en outre être une ½ pile élaborée au préalable et constituée par un collecteur, une cathode et un électrolyte, la couche de LIPON étant déposée sur la couche d'électrolyte. La couche protectrice peut aussi être formée sur un substrat quelconque portant un film de PP, ledit film pouvant être éliminé par pelage après formation de la couche de protection, et dépôt du film de lithium sur la couche de protection.

Une couche de protection peut en outre être constituée par du verre.

Une couche de protection constituée par une céramique ou par du verre a de préférence une épaisseur au plus égale à 1 µm.

Une couche de protection peut être constituée par une solution d'un composé ionique dans un polymère ou par un polymère portant des groupements ioniques. Le matériau polymère peut contenir en outre une céramique.

Une couche de protection du type polymère a de préférence une épaisseur de 1 à 100 µm.

Pour que la couche de protection constituée par un polymère ait une bonne tenue mécanique, il est préférable de choisir soit un polymère à masse moléculaire élevée qui a une tenue mécanique intrinsèque, soit un polymère qui possède des groupes réticulables et auquel une réticulation conférera la tenue mécanique. On préfère en particulier les polyéthers ou les polyvinyles.

Les polymères utiles comme matériau constitutif d'une couche protectrice peuvent être choisis parmi les polymères à 3 branches et les polymères à 4 branches.

Par polymère à 3 branches, on entend un polymère à trois branches en forme d'un peigne à 3 branches, tel que ceux qui sont décrits dans "Relationship between Structural Factor of Gel Electrolyte and Characteristics of Electrolyte and Lithium-ion Polymer Battery Performances", par Hiroe Nakagawa et alias, The 44th Symposium in Japan, Nov 4-6, 2003, abstract 3D26. Les 3 branches sensiblement parallèles de ces polymères sont fixées de préférence au centre et aux deux extrémités d'un squelette de petite taille, comportant de préférence 3 atomes, plus particulièrement 3 atomes de carbone dans la chaîne. Dans le cas d'une chaîne à 3 atomes de carbone, chacun des atomes est relié à une branche.

Parmi ces polymères à 3 branches, on préfère ceux qui ont un poids moléculaire moyen (Mw) variant de 1.000 à 1.000.000, plus particulièrement ceux dont le poids moléculaire moyen varie de 5.000 à 100.000.

Par polymère à quatre branches, on entend un polymère en forme d'un peigne à 4 branches. WO-03/063287 décrit une famille préférée de polymères à quatre branches. Les 4 branches sensiblement parallèles de ces polymères sont fixées respectivement entre les deux extrémités (de préférence de façon symétrique sur la chaîne) et aux deux extrémités d'une chaîne de petite taille ayant de préférence 4 atomes, qui sont de préférence 4 atomes de carbone. Dans le cas d'une chaîne à 4 atomes de carbone, chaque atome est relié à une branche.

Parmi ces polymères à 4 branches, on préfére ceux qui ont des groupes terminaux hybrides, plus particulièrement des groupes hybrides acrylate (de préférence méthacrylate) et alkoxy (de préférence alkoxy avec de 1 à 8 atomes de carbone, en particulier méthoxy ou éthoxy), ou vinyle, une branche au moins dudit polymère à quatre branches (et de préférence au moins deux branches) étant susceptible (s) de donner lieu à une réticulation.

Une autre famille de polymères à quatre branches, utiles pour la présente invention, est décrite dans les colonnes 1 et 2 de US-A-6.190.804. Ce document est incorporé par référence à la présente demande.

Le polymère est de préférence un polyéther en étoile qui possède au moins quatre branches ayant des groupes terminaux contenant les fonctions suivantes : acrylate ou méthacrylate et alkoxy, allyloxy et/ou vinyloxy, au moins une, et de préférence au moins deux de ces fonctions étant actives pour permettre une réticulation. Il a une stabilité à un voltage nettement supérieur à 4.

Un exemple de polyéther à 4 branches est un polymère tétrafonctionnel de préférence à haut poids moléculaire répondant à la formule (I) : 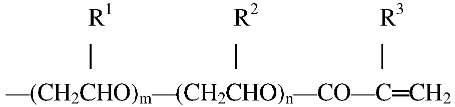 dans laquelle :
- R¹ et R² représentent chacun un atome d'hydrogène ou un alkyle inférieur (de préférence de 1 à 7 atomes de carbone) ;
- R³ représente un atome d'hydrogène ou un groupe méthyle ;
- m et n représentent chacun un nombre entier supérieur ou égal à 0 ;
- dans chaque chaîne à haut poids moléculaire, m+n > 35 ;
- chacun des groupes R¹, R², R³ et chacun des paramètres m et n peuvent être identiques ou différents dans les 4 chaînes à haut poids moléculaire.

Parmi ces polymères à quatre branches, ceux qui possèdent un poids moléculaire moyen compris entre 1.000 et 1.000.000, de préférence de 5.000 à 100.000 sont particulièrement intéressants.

Les polymères vinyliques de type éthylène glycol (EG), et plus particulièrement ceux décrits dans EP-A-1.249.461 (DKS), sont également intéressants comme matériau de protection, en particulier ceux dont le poids moléculaire moyen varie de 600 à 2.500.

Des polymères de cette famille peuvent avantageusement être obtenus en faisant réagir l'oxyde d'éthylène et le propanol-1-époxy-2,3 avec HO-(-CH₂CH₂O-)₄-H) ou en faisant réagir le propanol-1-époxy-2,3 avec l'éthylène glycol. Cette étape est suivie par le greffage de groupes fonctionnels polymérisables et/ou non polymérisables à chaque extrémité du squelette et des chaînes latérales du polymère. Les composés ayant un ou plusieurs groupes portant un hydrogène actif et des groupes alkoxy peuvent aussi être utilisés sous forme de monomères qui sont réticulés in situ, lors de l'élaboration de la couche protectrice.

Le groupe hydroxyle est un exemple de groupe portant un hydrogène actif. Les composés ayant de 1 à 5 groupes hydroxyle sont préférés. Le monométhyléther de triéthylèneglycol, l'éthylèneglycol, la glycérine, la diglycérine, le pentaérythritol et leurs dérivés sont des exemples spécifiques des composés ayant un ou plusieurs groupes portant un hydrogène actif.

CH₃ONa, t-BuOK et leurs dérivés sont des exemples spécifiques d'alkoxydes précurseurs de groupes alcoxy.

Les polymères polyéther utiles comme matériau pour la couche de protection ont un unité de structure représentée par la formule (1) ainsi que l'unité de structure représentée par la formule (2) et/ou l'unité de structure représentée par la formule (3). Le nombre d'unités de formule (1) dans une molécule est de 1 à 22.800, de préférence de 5 à 11.400, et plus particulièrement de 10 à 5.700. Le nombre total d'unités de formule (2) et/ou de formule (3) est de 1 à 13.600, de préférence de 5 à 6.800, et plus particulièrement de 10 à 3.400.

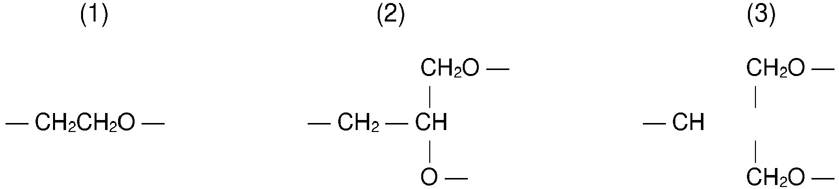

Les groupes (méth)acrylate, les groupes allyle et les groupes vinyle sont des exemples de groupes fonctionnels polymérisables greffés à chaque extrémité moléculaire. Les groupes alkyle et les groupes fonctionnels comprenant des atomes de bore sont des exemples de groupes fonctionnels non polymérisables. Parmi les groupes alkyle, on préfère les groupes alkyle ayant de 1 à 6 atomes de carbone, en particulier ceux qui ont de 1 à 4 atomes de carbone, et plus particulièrement le groupe méthyle.

Des exemples de groupes fonctionnels comprenant des atomes de bore incluent ceux qui sont représentés par les formules suivantes (4) ou (5).

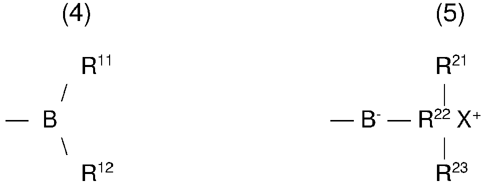

Les groupes R¹¹, et R¹² dans la formule (4) et les groupes R²¹, R²², R²³ dans la formule (5) peuvent être identiques ou différents, et chacun représente un hydrogène, un halogène, un groupe alkyle, alkoxy, aryle, alkényle, alkynyle, aralkyle, cycloalkyle, cyano, hydroxyle, formyle, aryloxy, alkylthio, arylthio, acyloxy, sulfonyloxy, amino, alkylamino, arylamino, carbonamino, oxysulfonylamino, sulfonamide, oxycarbonylamino, ureide, acyle, oxycarbonyle, carbamoyle, sulfonyle, sulfinyle, oxysulfonyle, sulfamoyle, carboxylate, sulfonate, ou phosphonate, un groupe hétérocyclique, ou un groupe -B(R^{a})(R^{b}), -OB(R^{a})(R^{b}) ou OSi(R^{a})(R^{b})(R^{c}) dans lesquels (R^{a}), (R^{b}) et (R^{c}) représentent chacun un hydrogène, un halogène, un groupe alkyle, alkoxy, aryle, alkenyle, alkynyle, aralkyle, cycloalkyle, cyano, hydroxyle, formyle, aryloxy, alkylthio, arylthio, acyloxy, sulfonyloxy, amino, alkylamino, arylamino, carbonamino, oxysulfonylamino, sulfonamide, oxycarbonylamino, ureide, acyle, oxycarbonyle, carbamoyle, sulfonyle, sulfinyle, oxysulfonyle, sulfamoyle, carboxylate, sulfonate, phosphonate, hétérocyclique ou dérivés de ceux-ci. R¹¹, et R¹² dans la formule (4) et R²¹, R²², R²³ dans la formule (5) peuvent être lié ensemble pour former un anneau, et l'anneau peut avoir des substituants. Chaque groupe peut aussi être substitué par des groupes substituables. X⁺ dans la formule (5) représente un ion métallique alcalin, de préférence un ion lithium.

Les extrémités des chaînes moléculaires dans le polymère polyéther peuvent toutes être des groupes fonctionnels polymérisables, des groupes fonctionnels non polymérisables, ou les deux.

Le poids moléculaire moyen (Mw) d'un polymère polyéther n'est pas spécialement limité, mais il est habituellement d'environ 500 à 2 millions, et avantageusement d'environ 1.000 à 1,5 millions.

Les polymères de ces familles préférées sont par ailleurs avantageusement choisis parmi les polymères qui sont réticulables par Ultra-Violet, Infra-Rouge, traitement thermique et/ou faisceau d'électron (EBeam).

Lorsqu'une couche de protection est destinée à former le collecteur de l'anode, elle est constituée par un matériau conducteur électronique. Le matériau conducteur électronique peut être un métal, choisi parmi Ni, Cu et l'acier inoxydable.

Une couche de protection en métal peut être obtenue par un procédé de vaporisation physique ou chimique, avec de préférence une épaisseur de 100 à 150 Å. Elle peut en outre être obtenue à partir d'un feuillard libre de métal, avec de préférence une épaisseur de 10 à 15 µm.

De préférence, une couche protectrice en métal a une résistivité de surface d inférieure à 1 Ω/cm².

**Un deuxième objet** de l'invention est constitué par le matériau multicouche obtenu par le procédé de l'invention.

Un matériau multicouche selon l'invention comprend au moins une couche de lithium vif et une couche de protection adhérant l'une à l'autre. Il est caractérisé en ce que la couche de lithium est une couche de lithium vif qui porte sur au moins l'une de ses surfaces une couche de passivation continue ou discontinue ayant une épaisseur moyenne inférieure à 50 Å, et en ce que ladite au moins une couche de protection est constituée par un matériau qui a une conductivité ionique

Lorsque le matériau multicouche est destiné à former une anode biface d'une batterie électrochimique, les deux surfaces de la couche de lithium vif portent une couche de protection à conductivité ionique. Les deux couches de protection peuvent être constituées par le même matériau ou par des matériaux différents.

Lorsque le matériau multicouche est destiné à former une anode monoface d'une batterie électrochimique, l'une des surfaces de la couche de lithium vif est adhérente à une couche de protection constituée par un matériau à conduction ionique et l'autre surface de la couche de lithium vif est adhérente à une couche de protection constituée par un matériau à conduction électronique.

Dans un matériau multicouche obtenu par le procédé de l'invention, l'adhésivité entre la couche de lithium et une couche de protection, mesurée selon la méthode ASTM n° D3359, est supérieure à 4, sur une échelle de 1 à 5.

Les couches de protection empêchent que l'exposition à une atmosphère susceptible entraîne la formation ou la croissance d'une couche de passivation du lithium.

Un matériau multicouche constitué par une couche de lithium vif entre deux couches protectrices métalliques trouve de préférence son application dans des domaines autres que les générateurs électrochimiques.

**Un troisième objet** de l'invention est constitué par une batterie électrochimique comportant au moins une cathode, un électrolyte, et au moins un matériau multicouche de l'invention en tant qu'anode. Le matériau multicouche de l'invention peut être avantageusement incorporé dans différents types de batteries électrochimiques. La batterie peut être une batterie monoface ou une batterie biface. La batterie peut être sous forme d'une batterie tout solide, d'une batterie à électrolyte liquide ou d'une batterie à électrolyte gel.

Une batterie monoface comprend au moins un ensemble constitué par les éléments suivants, dans l'ordre indiqué :
- un collecteur ;
- un matériau de cathode ;
- un électrolyte polymère, ou un séparateur imprégné par un électrolyte gel ou un séparateur imprégné par un électrolyte liquide ;
- un matériau multicouche ;
ledit matériau multicouche étant constitué par une couche de lithium vif entre une couche protectrice en métal et une couche protectrice non métallique, constituée par un matériau choisi parmi les céramiques de type LIPON, les verres ioniques, les polymères conducteurs, les polymères chargés en céramique, et les polymères rendus conducteurs par addition d'une solution d'un composé ionique dans un solvant liquide, la couche protectrice non métallique étant en contact avec l'électrolyte.

Une batterie biface est constituée par au moins un ensemble constitué par les éléments suivants, dans l'ordre indiqué :
- un collecteur ;
- un matériau de cathode ;
- un électrolyte polymère ;
- un matériau multicouche ;
- un électrolyte ;
- une cathode ;
- un collecteur ;
ledit matériau multicouche étant constitué par une couche de lithium entre deux couches de protection, chacune constituée indépendamment de l'autre par un matériau choisi parmi les LIPON, les verres ioniques, les polymères conducteurs et les polymères chargés en céramique, et les polymères rendus conducteurs par addition d'une solution d'un composé ionique dans un solvant liquide.

L'électrolyte d'une batterie selon l'invention peut être un électrolyte polymère, un séparateur imprégné par un électrolyte gel, ou un séparateur imprégné par un électrolyte liquide.

La cathode d'une batterie selon l'invention est constituée par un matériau qui comprend une matière active de cathode, et/ou un conducteur électronique et/ou un polymère, et/un sel de lithium et/ou un liant.

La matière active de la cathode peut être choisie parmi LiV₃O₈, V₂O₅, LiCoO₂, LiMn204, LiMn_{1/3}Co_{1/3}Mn_{1/3}O₂, et leurs mélanges.

Le polymère est de préférence un polyéther.

Le conducteur électronique est constitué par du carbone de Ketjen, un carbone de Shawinigan, un graphite, des fibres de carbone, des fibres de carbone vapo-déposées, et les mélanges d'au moins deux d'entre eux.

Le sel de lithium est choisi de préférence parmi le bis(trifluorométhane-sulfonyl)imidure de lithium (LiTFSI), le bis(fluorosulfonyl)imidure de lithium (LiFSI), le dicyanotriazole de lithium. (LiDCTA), le bis(pentafluoroéthanesulfonyl)imidure de lithium (LiBETI), LiPF₆, LiBF₄, LiBOB, et leurs mélanges.

Le liant est choisi de préférence dans le groupe constitué par le PVDF, PTFE, et les liants solubles dans l'eau (WSB) tels qu'un caoutchouc SBR par exemple.

Le collecteur de la cathode est constitué de préférence par de l'aluminium éventuellement revêtu de carbone.

Dans un mode de réalisation avantageux, l'anode du générateur selon l'invention est un matériau multicouche qui a une couche de protection métallique, constitué par Ni ou Cu, cette couche de protection formant le collecteur de l'anode.

Lorsque le film de lithium du multicouche est en contact avec un support en nickel ou en cuivre, ledit support sert de collecteur de courant.

L'électrolyte d'un générateur selon l'invention peut être un électrolyte liquide ou gel qui imprègne un séparateur constitué par un polypropylène (PP) ou un copolymère séquencé de propylène et d'éthylène (PP-PE-PP).

L'électrolyte gel peut être obtenu à partir d'une composition comprenant au moins un polymère ayant des groupes réticulables, au moins un sel de lithium ou au moins un solvant liquide et au moins un agent de réticulation. Le polymère est avantageusement un polyéther ou un mélange de polyéthers 4 branches ou polyéthylène glycol, ayant de préférence un poids moléculaire moyen MW variant de 2.000 à 10.000, plus particulièrement de 2.500 à 8.000. Le sel de lithium peut être choisi parmi ceux cités précédemment pour le matériau de cathode. Le solvant liquide est un solvant aprotique polaire tel que le carbonate d'éthyle (EC), le carbonate de propylène (PC), le carbonate de diméthyle (DMC), le carbonate de méthyle et d'éthyle (EMC), le carbonate de diéthyle (DEC), et la γ-butyrolactone (GBL), le carbonate de vinyle (VC) et ou un sel fondu ayant une SP inférieure à 50 Å, et leurs mélanges.

**Un quatrième objet** de l'invention est constitué par un procédé d'élaboration d'une batterie dont l'anode est constituée de lithium à vif, en utilisant un matériau multicouche de l'invention comme matériau d'anode.

Un générateur selon l'invention peut être élaboré en déposant une couche de céramique ou de verre accolée à une couche de lithium vif, sur une demi pile constituée par un film de cathode et un film d'électrolyte.

Lorsque l'électrolyte d'un générateur selon l'invention est un électrolyte polymère gel, on utilise de préférence un polymère réticulable et on le réticule par irradiation UV, IR ou par un faisceau d'électrons, ou par voie thermique ou par une combinaison des deux, après l'avoir déposé sur un substrat. Le polymère réticulable peut être choisi parmi les polymères réticulables définis pour le matériau constituant la couche de protection. Il est particulièrement avantageux d'effectuer la réticulation à l'intérieur du générateur, après l'avoir scellé.

### Description de modes préférentiels de l'invention

### Batterie tout solide

Pour l'élaboration d'une batterie tout solide, une couche de céramique (constituant la couche de protection) est déposée sur un substrat constitué par une demi pile, par pulvérisation plasma (incluant des gaz d'azote) à partir d'une source de LIPON (lithium-phosphore-azote), préparée selon la méthode décrite dans New Power Source, PV 2000-03, de K. Zaghib et Surampudi, pages 16 à 30 et pages 70 à 80. La demi pile comprend une cathode et un électrolyte solide polymère (SPE). La couche de LIPON déposée a avantageusement une épaisseur de l'ordre de 1 µm. La demi-pile est constituée par la superposition d'un collecteur, d'une couche de matériau formant la cathode, et l'électrolyte SPE. La couche de protection est déposée sur la couche SPE de la ½ pile.

Le matériau de cathode est constitué par une matière active de cathode (par exemple LiV₃O₈), un liant et éventuellement un matériau conférant une conduction ionique et un matériau conférant une conduction électronique. Le liant peut être un polymère de type polyéther. Le matériau conférant une conduction ionique est un sel de lithium, par exemple LiTFSI. Le matériau conférant une conductivité électronique peut être un carbone à haute surface spécifique. La cathode a une épaisseur de 45 µm.

L'électrolyte SPE est constitué par une solution de LiTFSI dans un polymère de type polyéther, et son épaisseur est avantageusement de 20 à 30 µm.

Un film de lithium est ensuite déposé sur le film de LIPON. Le lithium de départ est un film extrudé commercial qui a une épaisseur de 250 µm, et qui présente une couche de passivation d'une épaisseur supérieure à 50 Å. Ce film de lithium est laminé entre deux rouleaux d'acier inoxydable dans une chambre anhydre de type Classe 1.000, pour obtenir un film de lithium de 50 µm. Le laminage est effectué de préférence en présence d'un lubrifiant et/ou un additif, choisi de préférence parmi ceux décrits dans CA-A-2.099.526,

Ce film de 50 µm est déposé à vif sur la surface de SPE, c'est-à-dire très rapidement et avant que le lithium soit passivé par l'air. Le dépôt est effectué de préférence en moins de 2 secondes.

Il a été ainsi découvert que, si ce mode opératoire est effectué en une durée de temps déterminée, il évite de manière surprenante la croissance rapide du film de passivation qui est généralement formé de carbonate de Lithium Li₂CO₃ et d'oxyde Li₂O et LiOH et il permet une adhésivité très forte de la couche de lithium vif sur le couche de protection.

Le dépôt de lithium à vif sur le LIPON, selon le procédé de l'invention, permet ainsi de minimiser les épaisseurs des couches de Li₂CO₃ et de Li₂O, ce qui améliore sensiblement la cyclabilité à long terme de la batterie tout solide. En baissant ainsi l'impédance de la batterie, on obtient d'excellentes performances, en particulier en utilisation avec des courants élevés.

Le dépôt du film de lithium vif sur la couche de LIPON résulte en un blocage de la formation de dendrites grâce à la présence de la couche dure et solide de LiPON sur le lithium.

### Batterie à électrolyte liquide

Une batterie à électrolyte liquide selon l'invention comprend une cathode, un séparateur imprégné par un électrolyte, une couche protectrice, et. une anode constituée par un film de lithium vif

La cathode peut être constituée par un matériau composite, analogue à celui décrit pour la batterie tout solide.

Le séparateur peut être constitué par du polypropylène (PP) ou un PP-PPE-PP par exemple du type CELGARD.

L'électrolyte est avantageusement une solution de sel de lithium (par exemple LiTFSI) dans un solvant (par exemple un mélange de carbonate d'éthylène et de carbone de diéthylène).

Le film de lithium vif est obtenu par laminage d'un film de lithium commercial.

Pour l'assemblage de la batterie, le film de LIPON est déposé sur l'une des faces du séparateur par pulvérisation cathodique, le lithium vif est déposé rapidement sur la face libre du LIPON, puis un film de matériau de cathode est déposé sur la face libre du séparateur.

### Batterie à électrolyte gel

Selon ce mode particulier de mise en œuvre de l'invention, une cathode est fabriquée à partir d'une composition préparée par mélange de 82 %de LiFePO₄ (produit par la société Phostech) avec 3 % en poids de noir Ketjen, 3 % de Graphite, et 12 % de PVDF en présence du solvant NMP, à raison de 20 % en poids, par rapport au poids total des poudres précédemment mélangées.

La solution est épandue sur un collecteur aluminium carbone, puis le solvant est évaporé. On obtient un film ayant une épaisseur de 45 microns, avec une porosité de 73 %. La cathode est calandrée jusqu'au l'obtention d'une porosité de 40 %.

Un film de céramique de type LIPON ayant une épaisseur de 1 µm est déposée sur un film de CELGARD 3501®, puis un film de lithium vif est déposé sur la face libre du film de LIPON, par laminage d'un lithium extrudé.

Ensuite, la cathode est déposée sur la face libre du film de CELGARD 3501®.

L'ensemble ainsi constitué est introduit dans sac en aluminium souple, ainsi qu'un mélange des précurseurs de l'électrolyte gel, puis le sac est scellé. Le mélange de précurseurs est constitué par 95 % en poids d'un polyéther (qui est de préférence de type 4 branches), d'un mélange 1 M LiTFSI+ 0,5 M LiPF₆ + EC+GBL (1 :3 par volume), et de 1000 ppm de PEKADOX 16® en tant qu'agent initiateur de réticulation.

La batterie a été scellée par mise en œuvre de la technique décrite dans WO2004/068610 relatif à un générateur électrochimique rechargeable, et plus particulièrement dans l'exemple 2 du document.

La batterie est maintenue à 60°C pendant une heure. Cette étape est nécessaire pour former le gel dans les pores présents à la surface du matériau constitutif de l'électrode, du CELGARD et dans les pores de LIPON. Les batteries préparées par mise en œuvre de ce procédé sont fonctionnelles à température ambiante.

Il a été trouvé de façon surprenante que le lithium, du fait de sa réactivité chimique particulière, développe tout de suite après son laminage, une excellente adhésion avec les verres et céramiques.

### Exemples

Les exemples ci-après sont donnés à titre illustratifs et ne constituent pas une limitation de l'objet revendiqué.

### Exemple 1

On élabore une demi-pile constituée par un collecteur de courant, un matériau de cathode et un électrolyte solide polymère SPE.

Le matériau de cathode est constitué par LiV₃0₈, un liant polyéther, LiTFSI et un carbone à haute surface spécifique. La cathode a une épaisseur de 45 µm.

L'électrolyte SPE est constitué par une solution de LiTFSI dans un polymère de type polyéther, et son épaisseur est de 20 à 30 µm.

Un film de lithium métallique ayant une épaisseur de 250 µm est obtenu par extrusion, puis laminé manuellement avec un laminoir de bijoutier pendant 2 secondes. Un film de lithium ayant une épaisseur de 55 µm est ainsi obtenu, avec un film de passivation à sa surface dont l'épaisseur est de 25 Å.

Ce film est très collant et adhère au montage sur la demi-pile LiVO₃O₈/SPE. La demi-pile possède une impédance de 6 Ω, ce qui est nettement plus faible, donc plus avantageux que l'impédance de 12 Ω que présente une pile contenant un film de lithium standard à la même température de mesure de 60°C.

### Exemple 2

Un film de lithium métallique ayant une épaisseur de 250 µm est obtenu par extrusion. Il est ensuite laminé avec un laminoir de type bijoutier, à température ambiante et pendant 2 secondes. Un film de lithium vif, ayant une épaisseur de 55 µm est ainsi obtenu, et il a une couche de passivation ayant une épaisseur de 45 Å. Ce film a été évalué, la même journée, dans un Analyser XPS. L'épaisseur mesurée pour la couche de Li₂O est de 255 Å.

Un film de lithium vif qui est resté pendant une semaine dans une chambre anhydre présente une couche de Li₂O ayant une épaisseur de 250 Å et une couche de Li₂CO₃ ayant une épaisseur de 125 Å.

Ces valeurs sont à comparer avec celles du lithium commercial de la compagnie FMC dans lequel la couche de Li₂O est d'une épaisseur de 400 Å et celle de Li₂CO₃ d'une épaisseur de 150 µm.

### Exemple 3

On élabore une ½ pile collecteur de courant/matériau de cathode/SPE selon le procédé de l'exemple 1.

Une couche de LIPON est déposée par pulvérisation sur la face SPE de la ½ pile, à partir d'une cible de Li₃PO₄,. Elle présente une épaisseur de 900 nm et une adhésivité, mesurée selon la méthode ASTM numéro D3359 qui est de 5/5.

### Exemple 4

On a élaboré une batterie de type LiV₃O₈/SPE/LiPON/lithium selon le processus suivant.

Sur la face SPE d'une ½ pile "collecteur de courant/matériau de cathode/SPE" élaborée selon le mode opératoire de l'exemple 1, on a déposé par pulvérisation cathodique une couche de LIPON ayant une épaisseur de 1 µm

Un film de lithium a ensuite été déposé sur le film de LIPON, à partir d'un film extrudé commercial qui a une épaisseur de 250 µm, et qui présente une couche de passivation d'une épaisseur supérieure à 50 Å. Ce film de lithium commercial a été laminé entre deux rouleaux d'acier inoxydable dans une chambre anhydre de type Classe 1.000, pour obtenir un film de lithium de 50 µm.

Ce film de 50 µm a été déposé à vif sur la surface de SPE, en moins de 2 secondes, puis un collecteur de courant a été déposé sur le film de lithium.

La batterie ainsi constituée a une capacité de 5 mAh. Elle a été cyclée en décharge C/3 et chargée à un potentiel constant de 3,1 Volts pendant 1 heure. La capacité et l'efficacité coulombique sont stables pendant les 100 cycles. Une perte de capacité de 3% est mesurée après 100 cycles, mais l'efficacité coulombique reste de 99,9 à 100 %.

Une batterie LiV₃O₈/SPE/Lithium, élaborée avec une ½ pile "collecteur de courant/matériau de cathode/SPE" analogue et avec un lithium Standard, a été cyclée en C/3 en décharge et chargée en 2 C à un potentiel constant de 3,1 Volts pendant 1 heure. Après 10 cycles la capacité a baissée de 30 % et l'efficacité de 50 %.

En conclusion les exemples précédents mettent en évidence la très faible épaisseur de la couche de passivation dans les matériaux multicouche de l'invention ainsi que l'adhésivité exception du lithium su sa couche de protection.

Par ailleurs les batteries intégrant un matériau multicouche de l'invention se caractérisent par une faible impédance et par une efficacité coulombique remarquable en charge/décharge.

## Revendications

1. Procédé d'élaboration d'un matériau multicouche qui comprend au moins une couche de lithium vif, ledit procédé comprenant une étape consistant à déposer un film de lithium vif sur une couche de protection, ledit dépôt étant effectué par laminage pendant une durée de 1 à 15 secondes.

2. Procédé selon la revendication 1, **caractérisé en ce que** la couche de lithium vif est constituée par du lithium qui a un degré de pureté supérieur à 99 %, ou par un alliage de lithium comprenant moins de 3000 ppm d'impuretés.

3. Procédé selon la revendication 1, **caractérisé en ce que** la couche de lithium vif porte sur une ou chacune de ses surfaces, une couche de passivation qui est telle que le rapport "épaisseur de la couche de passivation"/"épaisseur de la couche de lithium vif" est de 2.10⁻⁵ à 1.10⁻³.

4. Procédé selon la revendication 1, **caractérisé en ce que** la couche de passivation comprend au moins un compose de lithium du groupe constitue par Li₂O, Li₂CO₃, LiOH, et Li₂S₂O₄ où Li₂O, Li₂CO₃ et LiOH se forment en atmosphère sèche, Li₂S₂O₄ se forme en présence de SO₂.

5. Procédé selon la revendication 1, **caractérisé en ce qu'**on dépose une couche de protection sur chacune des surfaces du film de lithium, les deux couches de protection étant constituées par un matériau qui a une conduction ionique.

6. Procédé selon la revendication 1, **caractérisé en ce qu'**on dépose le film de lithium vif sur une couche de protection constituée par un matériau qui a une conduction ionique, et on dépose éventuellement sur la surface libre du film de lithium vif, une couche de protection constituée par un matériau a conduction électronique.

7. Procédé selon la revendication 1, **caractérisé en ce qu'**il est mis en œuvre dans une atmosphère d'air sec, dans une chambre anhydre **caractérisée par** un point de rosée entre -45 et -55°C et une humidité relative entre 0,7 et 2,2 %.

8. Procédé selon la revendication 1, **caractérisé en ce qu'**une couche de protection conductrice ionique comprend au moins deux sous-couches, constituées indépendamment l'une de l'autre par un matériau qui a une conduction ionique supérieure à 10⁻⁴ S.cm², et qui est choisi parmi les céramiques, les verres, et les matériaux polymères contenant éventuellement une charge céramique.

9. Procédé selon la revendication 1, **caractérisé en ce que** la couche de protection est constituée par une céramique ou par du verre et elle a une épaisseur au plus égale à 1 µm, par une solution d'un composé ionique dans un polymère ou par un polymère portant des groupements ioniques, contenant éventuellement une céramique, par un polymère et elle a une épaisseur de 1 à 100 µm, ou par un matériau conducteur électronique.

10. Procédé selon la revendication 1, **caractérisé en ce que** le matériau constituant la couche protectrice est constitué par une céramique de type oxynitrure de phosphore et de lithhium non stœchiométrique.

11. Procédé selon la revendication 10, **caractérisé en ce que** l'oxynitrure répond à la formule Li_{3,3}PO_{3,9}N_{0,17}.

12. Procédé selon la revendication 1, **caractérisé en ce que** la couche de protection est constituée par un polyéther ou un polyvinyle.

13. Matériau multicouche obtenu selon l'une des revendications 1 à 12, comprenant au moins une couche de lithium vif et une couche de protection adhérant l'une à l'autre, **caractérisé en ce que** la couche de lithium est une couche de lithium vif qui porte sur au moins l'une de ses surfaces une couche de passivation continue ou discontinue ayant une épaisseur moyenne inférieure à 50 Å, et **en ce que** ladite au moins une couche de protection est constituée par un matériau qui a une conductivité ionique.

14. Matériau multicouche selon la revendication 13, **caractérisé en ce que** les deux surfaces de la couche de lithium vif portent une couche de protection à conductivité ionique.

15. Matériau multicouche selon la revendication 13, **caractérisé en ce que** l'une des surfaces de la couche de lithium vif est adhérente à une couche de protection constituée par un matériau a conduction ionique et l'autre surface de la couche de lithium vif est adhérente a une couche de protection constituée par un matériau à conduction électronique.

## Patentansprüche

1. Verfahren zum Erstellen eines mehrlagigen Materials, das mindestens eine Lage aus aktivem Lithium umfasst, wobei das Verfahren einen Schritt umfasst, der darin besteht, einen Film aus aktivem Lithium auf eine Schutzschicht abzulagern, wobei die Ablagerung durch Laminierung während einer Dauer von 1 bis 15 Sekunden erfolgt.

2. Verfahren nach Anspruch 1, **dadurch gekennzeichnet, dass** die Lage aus aktivem Lithium aus Lithium besteht, das einen Reinheitsgrad von mehr als 99 % aufweist, oder aus einer Lithiumlegierung, umfassend weniger als 3000 ppm Verunreinigungen.

3. Verfahren nach Anspruch 1, **dadurch gekennzeichnet, dass** die Lage aus aktivem Lithium auf einer oder jeder ihrer Oberflächen eine Passivierungslage trägt, die derart ist, dass das Verhältnis zwischen der "Dicke der Passivierungslage" und der "Dicke der Lage aus aktivem Lithium" von 2.10⁻⁵ bis 1.10⁻³ ist.

4. Verfahren nach Anspruch 1, **dadurch gekennzeichnet, dass** die Passivierungslage mindestens eine Lithiumverbindung der Gruppe umfasst, bestehend aus Li₂O, Li₂CO₃, LiOH und Li₂S₂O₄, wobei sich Li₂O, Li₂CO₃ und LiOH in trockener Atmosphäre bilden, wobei sich Li₂S₂O₄ in Anwesenheit von SO₂ bildet.

5. Verfahren nach Anspruch 1, **dadurch gekennzeichnet, dass** eine Schutzlage auf jeder der Oberflächen des Films aus Lithium abgelagert wird, wobei die zwei Schutzlagen aus einem Material bestehen, das eine Ionenleitung aufweist.

6. Verfahren nach Anspruch 1, **dadurch gekennzeichnet, dass** der Film aus aktivem Lithium auf einer Schutzlage abgelagert wird, die aus einem Material besteht, das eine Ionenleitung aufweist, und eventuell auf der freien Oberfläche des Films auf aktivem Lithium eine Schutzlage abgelagert wird, das aus einem Material mit elektronischer Leitung besteht.

7. Verfahren nach Anspruch 1, **dadurch gekennzeichnet, dass** es in einer Atmosphäre trockener Luft in einer wasserfreien Kammer durchgeführt wird, **gekennzeichnet durch** einen Kondensationspunkt zwischen -45 und -55 °C und eine relative Feuchtigkeit zwischen 0,7 und 2,2 %.

8. Verfahren nach Anspruch 1, **dadurch gekennzeichnet, dass** eine ionisch leitende Schutzlage mindestens zwei sich darunter befindende Lagen umfasst, die unabhängig voneinander aus einem Material bestehen, das eine Ionenleitung von mehr als 10⁻⁴ S.cm² aufweist, und die ausgewählt ist aus Keramiken, Gläsern, polymeren Materialien, die eventuell eine keramische Ladung enthalten.

9. Verfahren nach Anspruch 1, **dadurch gekennzeichnet, dass** die Schutzlage aus Keramik oder aus Glas besteht und sie eine Dicke von höchstens gleich 1 µm aufweist, aus einer Lösung einer ionischen Verbindung in einem Polymer oder aus einem Polymer, das ionische Gruppierungen trägt, enthaltend eventuell Keramik, aus einem Polymer, und sie eine Dicke von 1 bis 100 µm aufweist, oder aus einem elektronisch leitenden Material.

10. Verfahren nach Anspruch 1, **dadurch gekennzeichnet, dass** das Material, aus dem die Schutzschicht besteht, aus Keramik vom Typ Phosphoroxynitrid und nicht stöchiometrischem Lithium besteht.

11. Verfahren nach Anspruch 10, **dadurch gekennzeichnet, dass** das Oxynitrid der Formel Li_{3,3}PO_{3,9}N_{0,17}.entspricht.

12. Verfahren nach Anspruch 1, **dadurch gekennzeichnet, dass** die Schutzlage aus Polyether oder einem Polyvinyl besteht.

13. Mehrlagiges Material, erhalten nach einem der Ansprüche 1 bis 12, umfassend mindestens eine Lage aus aktivem Lithium, und eine Schutzlage, die aneinander haften, **dadurch gekennzeichnet, dass** die Lage aus Lithium eine Lage aus aktivem Lithium ist, die auf mindestens einer ihrer Oberflächen eine kontinuierliche oder diskontinuierliche Passivierungslage mit einer mittleren Dicke von weniger als 50 Å trägt, und dadurch, dass die mindestens eine Schutzlage aus einem Material besteht, das eine ionische Leitfähigkeit aufweist.

14. Mehrlagiges Material nach Anspruch 13, **dadurch gekennzeichnet, dass** die zwei Oberflächen der Lage aus aktivem Lithium eine Schutzlage mit ionischer Leitfähigkeit tragen.

15. Mehrlagiges Material nach Anspruch 13, **dadurch gekennzeichnet, dass** eine der Oberflächen der Lage aus aktivem Lithium an einer Schutzlage haftet, die aus einem Material mit ionischer Leitung besteht, und die andere Oberfläche der Lage aus aktivem Lithium an einer Schutzlage haftet, die aus einem Material mit elektronischer Leitung besteht.

## Claims

1. A process for preparing a multilayer material which comprises at least one layer of active lithium, said process comprising a step consisting in depositing a film of active lithium on a protective layer, said deposition being carried out by rolling for a period of 1 to 15 seconds.

2. The process according to claim 1, **characterized in that** the layer of active lithium consists of lithium which has a degree of purity higher than 99%, or of a lithium alloy comprising less than 3000 ppm of impurities.

3. The process according to claim 1, **characterized in that** the layer of active lithium carries on one or each of its surfaces, a passivation layer which is such that the ratio "thickness of the passivation layer"/"thickness of the layer of active lithium" is from 2.10⁻⁵ to 1.10⁻³.

4. The process according to claim 1, **characterized in that** the passivation layer comprises at least one lithium compound from the group consisting of Li₂O, Li₂CO₃, LiOH, and Li₂S₂O₄ where Li₂O, Li₂CO₃ and LiOH are formed in a dry atmosphere, Li₂S₂O₄ is formed in the presence of SO₂.

5. The process according to claim 1, **characterized in that** a protective layer is deposited on each of the surfaces of the lithium film, the two protective layers consisting of an ion-conducting material.

6. The process according to claim 1, **characterized in that** the film of active lithium is deposited on a protective layer consisting of an ion-conducting material, and a protective layer consisting of an electron-conducting material is optionally deposited on the free surface of the film of active lithium.

7. The process according to claim 1, **characterized in that** it is implemented in a dry air atmosphere, in an anhydrous chamber **characterized by** a dew point between -45 and -55°C and a relative humidity between 0.7 and 2.2%.

8. The process according to claim 1, **characterized in that** an ion-conducting protective layer comprises at least two sublayers, consisting independently of one another of a material which has an ionic conduction higher than 10-⁴S.cm², and which is selected from ceramics, glasses, and polymer materials optionally containing a ceramic filler.

9. The process according to claim 1, **characterized in that** the protective layer consists of a ceramic or of glass and has a thickness equal to or less than 1 µm, of a solution of an ionic compound in a polymer or of a polymer carrying ionic groups, optionally containing a ceramic, of a polymer and has a thickness between 1 and 100 µm, or of an electron conducting material.

10. The process according to claim 1, **characterized in that** the material constituting the protective layer consists of a ceramic of the nonstoichiometric lithium phosphorus oxynitride type.

11. The process according to claim 10, **characterized in that** the oxynitride has the formula Li_{3.3}PO_{3.9}N_{0.17}.

12. The process according to claim 1, **characterized in that** the protective layer consists of a polyether or a polyvinyl.

13. A multilayer material obtained according to any one of claims 1 to 12, comprising at least one layer of active lithium and one protective layer adhering to one another, **characterized in that** the lithium layer is a layer of active lithium which carries, on at least one of its surfaces, a continuous or discontinuous passivation layer having an average thickness of less than 50 Å, and **in that** said at least one protective layer consists of an ion-conducting material.

14. The multilayer material according to claim 13, **characterized in that** the two surfaces of the layer of active lithium carry an ion-conducting protective layer.

15. The multilayer material according to claim 13, **characterized in that** one of the surfaces of the layer of active lithium adheres to a protective layer consisting of an ion-conducting material, and the other surface of the layer of active lithium adheres to a protective layer consisting of an electron-conducting material.
